# EUROPÄISCHE PATENTSCHRIFT

(11) **EP 3 981 062 B1**
(45) Veröffentlichungstag und Bekanntmachung des Hinweises auf die Patenterteilung: **15.10.2025**
(21) Anmeldenummer: 20726429.2
(22) Anmeldetag: 18.05.2020
(51) Int. Cl.: H02K 15/043

(54) **VERFAHREN ZUR HERSTELLUNG EINER STATORWICKLUNG UND ELEKTROMASCHINE**
METHOD FOR PRODUCING A STATOR WINDING AND ELECTRIC MACHINE
PROCÉDÉ DE FABRICATION D'UN ENROULEMENT STATORIQUE ET MACHINE ÉLECTRIQUE

(30) Priorität: 05.06.2019 DE 102019208227
(43) Veröffentlichungstag der Anmeldung: 13.04.2022
(73) Patentinhaber: VOLKSWAGEN AKTIENGESELLSCHAFT, 38440 Wolfsburg (DE)
(72) Erfinder: SHAGHAGHI, Arash, 34253 Lohfelden (DE); WITTMANN, Leslie Samira, 34292 Ahnatal (DE)
(86) Internationale Anmeldenummer: PCT/EP2020/063827
(87) Internationale Veröffentlichungsnummer: WO 2020/244914

(56) Entgegenhaltungen:
- EP-A1- 1 710 896
- DE-T2- 60 208 387
- GB-A- 1 436 543
- US-A- 2 007 089
- US-A1- 2007 089 284

## Beschreibung

Die vorliegende Erfindung betrifft ein Verfahren zur Herstellung einer Statorwicklung für einen Stator einer Elektromaschine. Ferner betrifft die Erfindung eine Elektromaschine, welche einen Stator mit einer derartigen Statorwicklung aufweist.

Es gibt eine Vielzahl unterschiedlicher Ausführungsformen von Elektromaschinen. Eine gängige Art von Elektromaschinen weist einen Stator auf, welcher koaxial mit einem rotierend zum Stator gelagerten Rotor angeordnet ist. In einer besonders verbreiteten Ausführungsform umgibt der Stator den Rotor bzw. zumindest einen Aktivbereich des Rotors vollumfänglich oder als segmentierter Stator teilumfänglich. Zur Bereitstellung eines Magnetfelds sind am Rotor oftmals Permanentmagnete oder Magnetspulen bzw. Rotorwicklungen angeordnet. Zur Erzeugung eines magnetischen Wechselfelds, welches im Zusammenspiel mit dem Magnetfeld des Rotors zum Antreiben des Rotors ausgebildet ist, weist der Stator eine Statorwicklung auf.

Statorwicklungen weisen einen Statordraht oder mehrere nebeneinander angeordnete Statordrähte auf, welche um den Stator herumgewickelt sowie in Statornuten des Stators angeordnet sind. Gemäß bekannter Verfahren werden die Statorwicklungen zunächst auf einer Wickelvorrichtung hergestellt und anschließend auf dem Stator angeordnet. Bei einigen Wickelverfahren wie Nadel-, Flyer- und Linearwickeltechnik wird die Statorwicklung direkt auf dem Stator, dem Einzelzahn oder den Zahngruppen hergestellt. Zur Vermeidung eines Stromflusses zwischen benachbarten Statordrahtabschnitten, insbesondere in den Statornuten, sind die Statordrähte vollumfänglich isoliert, insbesondere mit einer isolierenden Lackschicht versehen.

Überdies gibt es unterschiedliche Wicklungsarten für Statorwicklungen, wie beispielsweise Schleifenwicklungen und Wellenwicklungen. Im Betrieb weisen benachbarte Wicklungswellen der Wellenwicklung zueinander eine Spannungsdifferenz auf. Je größer die Spannungsdifferenz, desto höher ist die Wahrscheinlichkeit der Teilentladungen, der elektrischen Alterung und folglich des Ausfalls der Elektromaschine.

Zum Vermeiden der Teilentladungen ist es bekannt, eine Schichtdicke der den Statordraht umgebenden Isolationsschicht zu vergrößern oder zusätzliches Isolationsmaterial in die Statornut oder auch in den Wickelkopf einzubringen. Diese Lösungen haben allesamt den Nachteil, dass die Effizienz der Elektromaschine reduziert ist. Eine Wellenwicklung ist beispielsweise aus der DE 10 2016 222 818 A1 bekannt.

Aus der DE 10 2015 222 367 A1 ist eine als Wellenwicklung ausgebildete Statorwicklung bekannt, welche mindestens zwei parallel geschaltete Wicklungsstränge haben, wobei die Wicklungsstränge jeweils als Reihenschaltung mindestens zweier Wicklungssegmente ausgebildet ist. Die Wicklungssegmente können beispielsweise miteinander verschweißt sein. Die US 2016/0268860 A1 und US 2018/0278111 A1 zeigen jeweils eine Wellenwicklung für einen Stator einer elektrischen Maschine, wobei der Statordraht aus einer Vielzahl von in Reihe zusammengeschweißter Statordrahtsegmenten besteht. Eine derartige Statorwicklung ist nur sehr aufwendig herstellbar, zudem können weiterhin große Spannungsdifferenzen zwischen benachbarten Statordrahtsegmenten auftreten. Die Dokumente EP 1 710 896 A1,

DE 602 08 387 T2 und US 2007 / 0 089 284 A1 offenbaren weitere Verfahren zur Herstellung von Statorwicklungen.

Es ist daher Aufgabe der vorliegenden Erfindung, die voranstehend beschriebenen Nachteile bei einer Statorwicklung, insbesondere einer Wellenwicklung, zu beheben oder zumindest teilweise zu beheben. Insbesondere ist es Aufgabe der vorliegenden Erfindung ein Verfahren zur Herstellung einer Statorwicklung für einen Stator einer Elektromaschine zu schaffen, das auf eine einfache und kostengünstige Art und Weise die Herstellung einer Statorwicklung, insbesondere mit geringerer Spannungsdifferenz zwischen benachbarten Statorwellenabschnitten gewährleistet. Überdies ist es die Aufgabe der vorliegenden Erfindung, eine Elektromaschine zu schaffen, welche auf eine einfache sowie kostengünstige Art und Weise herstellbar ist und insbesondere eine geringere Spannungsdifferenz zwischen benachbarten Statorwellenabschnitten aufweist.

Voranstehende Aufgabe wird durch die Patentansprüche gelöst. Demnach wird die Aufgabe durch ein erfindungsgemäßes Verfahren zur Herstellung einer Statorwicklung für einen Stator einer Elektromaschine mit den Merkmalen des unabhängigen Anspruchs 1 sowie durch eine erfindungsgemäße Elektromaschine mit den Merkmalen des nebengeordneten Anspruchs 10 gelöst. Weitere Merkmale und Details der Erfindung ergeben sich aus den Unteransprüchen.

Dabei gelten Merkmale und Details, die im Zusammenhang mit dem erfindungsgemäßen Verfahren beschrieben sind, selbstverständlich auch im Zusammenhang mit der erfindungsgemäßen Elektromaschine und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zur Herstellung einer Statorwicklung für einen Stator einer Elektromaschine gelöst. Das Verfahren weist die folgenden Schritte auf:
- Bereitstellen eines Statordrahts,
- Wickeln des Statordrahts um ein Wickelwerkzeug zum Erzeugen einer Wellenwicklung mit einer Mehrzahl von Wickelwellen, wobei das Wickelwerkzeug ein erstes Wickelmittel und ein vom ersten Wickelmittel beabstandet angeordnetes zweites Wickelmittel aufweist, wobei sich das erste Wickelmittel und das zweite Wickelmittel zumindest in einem Bereich gemeinsam entlang einer in einer Mitte zwischen dem ersten Wickelmittel und dem zweiten Wickelmittel verlaufenden ersten Wickellängsachse erstrecken, wobei die einzelnen Wickelwellen jeweils durch Wickeln des Statordrahts um das erste Wickelwerkzeug und das zweite Wickelwerkzeug herum erzeugt werden,
- Halten des Statordrahts am ersten Wickelmittel und am zweiten Wickelmittel zum Verhindern eines seitlichen Abrutschens des Statordrahts in Richtung des Verlaufs der ersten Wicklungslängsachse,
- Relatives Verschieben des zweiten Wickelmittels zum ersten Wickelmittel in Richtung des Verlaufs der ersten Wicklungslängsachse, wobei die einzelnen Wickelwellen hierdurch jeweils entlang der ersten Wicklungslängsachse verbogen werden, und
- Relatives Umklappen des ersten Wickelmittels zum zweiten Wickelmittel um die erste Wicklungslängsachse um einen Umklappwinkel derart, dass am ersten Wickelmittel angeordnete Statordrahtabschnitte den am zweiten Wickelmittel angeordneten Statordrahtabschnitten benachbart angeordnet sind.

Die "benachbarte angeordnete" Statordrahtabschnitte sind im Sinne der Erfindung insbesondere so zu verstehen, dass die Statordrahtabschnitte wenigstens abschnittsweise gleiche Position entlang der Wickellängsachse einnehmen, nämlich wenigstens abschnittsweise quer zu der Wickellängsachse nebeneinander liegen, sodass die Statordrahtabschnitte vorzugsweise nach Montage der Wellenwicklung in einer gemeinsamen Statornut angeordnet sind.

Der Statordraht wird beispielsweise aufgespult auf einer Drahtrolle bereitgestellt. Es ist erfindungsgemäß bevorzugt, dass ein gerade gerichteter Statordraht bereitgestellt wird. Vorzugsweise werden mehrere Statordrähte bereitgestellt, sodass eine Statorwicklung mit mehreren verschiedenen Phasen, insbesondere drei Phasen, herstellbar ist. Für jede der Phasen können erfindungsgemäß auch mehrere Statordrähte, z. B. zwei, drei oder mehr, bereitgestellt werden. Im Folgenden wird des besseren Verständnisses halber das Verfahren nur für einen Statordraht beschrieben, wobei diese Beschreibung auch auf mehrere Statordrähte übertragbar ist.

Vorzugsweise wird der Statordraht für das Wickeln von der Drahtrolle abgespult, gerade gerichtet und mittels einer Drahtdüse dem Wickelwerkzeug zugeführt. Die Drahtdüse ist vorzugsweise ausgebildet, eine Mehrzahl von Statordrähten gleichzeitig dem Wickelwerkzeug zuzuführen, sodass die einzelnen Phasen gleichzeitig gewickelt werden können.

Der Statordraht wird um das Wickelwerkzeug gewickelt. Hierbei wird eine als Wellenwicklung ausgebildete Statorwicklung erzeugt, welche eine Vielzahl von Wickelwellen aufweist. Das Wickelwerkzeug weist das erste Wickelmittel und das vom ersten Wickelmittel beabstandete zweite Wickelmittel auf. Die einzelnen Wickelwellen werden derart erzeugt, dass Statordraht vom ersten Wickelmittel zum zweiten Wickelmittel und weiter zum ersten Wickelmittel gewickelt wird. Ein Umschlingungswinkel des Statordrahts auf dem ersten Wickelmittel und dem zweiten Wickelmittel ist vorzugsweise jeweils kleiner als 200° und beträgt weiter bevorzugt etwa 180°. Mit einer einzelnen Wickelwelle werden somit das erste Wickelmittel und das zweite Wickelmittel gemeinsam vom Statordraht umspannt.

Das Halten des Statordrahts am ersten Wickelmittel und am zweiten Wickelmittel erfolgt mittels des Haltemittels. Das Haltemittel ist derart ausgebildet, ein seitliches Abrutschen des Statordrahts parallel zur Wickellängsachse verhindert oder zumindest erschwert ist. Vorzugsweise wird der Statordraht derart gehalten, dass eine Relativbewegung des Statordrahts quer, insbesondere rechtwinklig, zur Wickellängsachse möglich ist. Ein Haltemittel ist vorzugsweise am ersten Wickelmittel und ein Haltemittel ist vorzugsweise am zweiten Wickelmittel angeordnet. Vorzugsweise ist das Haltemittel starr ausgebildet. Es kann erfindungsgemäß vorgesehen sein, dass ein Haltemittel einteilig mit dem ersten Wickelmittel und ein Haltemittel einteilig mit dem zweiten Wickelmittel ausgebildet ist. Erfindungsgemäß kann das Haltemittel beispielsweise eine Klemmvorrichtung zum Klemmen des Statordrahts aufweisen.

Beim relativen Verschieben des ersten Wickelmittels zum zweiten Wickelmittel in eine bestimmte Richtung wird der Statordraht vom jeweiligen Wickelmittel derart mitgenommen, dass die erzeugte Wellenwicklung hierdurch entsprechend verbogen bzw. geschränkt wird. Hierbei kann beispielsweise das erste Wickelmittel ortsfest gehalten und das zweite Wickelmittel in eine vorbestimmte Richtung um eine vorbestimmte Strecke, insbesondere in Bogenform, entlang der Wickellängsachse bewegt werden. Alternativ können auch das erste Wickelmittel und das zweite Wickelmittel in entgegengesetzte Richtungen, insbesondere in Bogenform, entlang der Wickellängsachse bewegt werden. Eine zeitgleiche gemeinsame Bewegung des ersten Wickelmittels und des zweiten Wickelmittels entlang einer beliebigen gemeinsamen Bewegungsbahn kann optional durchgeführt werden. Das Ergebnis dieses Verfahrensschritts ist eine Wellenwicklung, bei welcher obere Wellenhälften zu unteren Wellenhälften entlang der Wickellängsachse versetzt angeordnet sind. Das relative Verschieben erfolgt vorzugsweise derart, dass bei der fertigen Statorwicklung benachbarte Statordrahtabschnitte eine Spannungsdifferenz von maximal 50% einer maximal möglichen Potenzialdifferenz einer Statorwicklung aufweisen.

Schließlich werden das erste Wickelmittel und das zweite Wickelmittel relativ zueinander um die Wickellängsachse verschwenkt. Hierbei kann beispielsweise das erste Wickelmittel ortsfest gehalten und das zweite Wickelmittel um die Wickellängsachse verschwenkt werden. Alternativ können auch das erste Wickelmittel und das zweite Wickelmittel um Wickellängsachse aufeinander zu verschwenkt werden. Eine zeitgleiche gemeinsame Bewegung des ersten Wickelmittels und des zweiten Wickelmittels entlang einer beliebigen gemeinsamen Bewegungsbahn kann optional durchgeführt werden. Das Ergebnis dieses Verfahrensschritts ist eine Wellenwicklung, bei welcher die oberen Wellenhälften mit den vormals unteren Wellenhälften auf derselben Seite der Wickellängsachse angeordnet sind.

Ein erfindungsgemäßes Verfahren zur Herstellung einer Statorwicklung für einen Stator einer Elektromaschine hat gegenüber herkömmlichen Verfahren den Vorteil, dass mit einfachen Mitteln sowie auf eine kostengünstige Art und Weise eine Statorwicklung herstellbar ist, bei welcher benachbarte Statordrahtabschnitte eine besonders geringe Spannungsdifferenz aufweisen. Zudem ist ein aufwendiges Verschweißen von Statordrahtsegmenten nicht erforderlich. Mittels des erfindungsgemäßen Verfahrens lassen sich beispielsweise Statorwicklungen besonders vorteilhaft herstellen, bei welchen vier Statordrähte oder eine Vielzahl von 4 Statordrähten, wie beispielsweise 8, 12 usw., in einer Statornut angeordnet sind.

Gemäß einer bevorzugten Weiterentwicklung der Erfindung kann bei einem Verfahren vorgesehen sein, dass ein Statordraht mit einem rechteckigen Drahtquerschnitt bereitgestellt wird. Hierbei ist es bevorzugt, dass der Drahtquerschnitt eine Drahtbreite und eine Drahthöhe aufweist, welche unterschiedlich groß ausgebildet sind. Ein derartiger Statordraht hat den Vorteil, dass ein Befüllungsgrad der Statornuten mit Statordraht verbessert ist, da nach der Herstellung der Statorwicklung zwischen benachbarten Statordrähten ein geringerer Spalt ausgebildet ist.

Es ist erfindungsgemäß bevorzugt, dass ein Statordraht bereitgestellt wird, dessen Drahthöhe höchstens 3 mm und dessen Drahtbreite höchstens 5 mm beträgt. Besonders bevorzugt beträgt die Drahthöhe zwischen 1 mm und 2,5 mm, insbesondere 2 mm, und die Drahtbreite zwischen 2 mm und 4,5 mm, insbesondere 3 mm. Ein derartiger Statordraht ist zum Herstellen einer Statorwicklung besonders geeignet und lässt sich mit üblichen Fertigungsmitteln leicht umformen.

Weiter bevorzugt wird als erstes Wickelmittel ein erstes Wickelschwert und/oder als zweites Wickelmittel ein zweites Wickelschwert verwendet. Unter einem Wickelschwert wird erfindungsgemäß eine sich entlang der Wickellängsachse erstreckende Vorrichtung verstanden, welche zwei parallele bzw. zumindest im Wesentlichen parallele Seitenflächen aufweist. Vorzugsweise weist das Wickelschwert eine Wickelseite und eine der Wickelseite entgegengesetzte Freiseite auf. Die Wickelseite ist ausgebildet, beim Wickeln dem Statordraht ein Gegenlager bereitzustellen, wobei die Freiseite des Wickelschwerts einem anderen Wickelschwert zugewandt ist. Die Wickelseite und Freiseite sind vorzugsweise gekrümmt bzw. abgerundet ausgebildet, um ein Umbiegen des Statordrahts um das Wickelschwert zu verbessern und Drahtbeschädigungen zu vermeiden. Die Haltemittel sind vorzugsweise an den Seitenflächen der Wickelschwerter angeordnet. Derartige Wickelmittel haben den Vorteil, dass ein Wickeln des Statordrahts sowie das Relative Verschieben der Wickelmittel besonders vorteilhaft durchführbar sind.

In einer besonders bevorzugten Ausgestaltung erfolgt das relative Verschieben des ersten Wickelmittels zum zweiten Wickelmittel um zwischen 5/12 bis 7/12 einer Wickelwellenlänge der Wickelwellen entlang der ersten Wicklungslängsachse. Bei einer bevorzugten Zweischichtwicklung beträgt das relative Verschieben 1/2 der Wickelwellenlänge. Dies hat den Vorteil, dass mit einfachen Mitteln sowie auf eine kostengünstige Art und Weise eine besonders gleichmäßig ausgebildete Statorwicklung erzeugt wird.

Vorzugsweise der Statordraht mittels der Haltemittel an einer Vorderseite und einer Rückseite des ersten Wickelmittels und/oder an einer Vorderseite und einer Rückseite des zweiten Wickelmittels an jeweils unterschiedlichen Höhen gehalten. Demnach ist der Statordraht beispielsweise auf der Rückseite des ersten Wickelmittels auf einer anderen Höhe gehalten als auf der Vorderseite des ersten Wickelmittels. Unter einer Höhe wird in diesem Zusammenhang ein Abstand zur ersten Wicklungslängsachse verstanden. Dies hat den Effekt, dass beim relativen Verschieben der Statordraht an unterschiedlichen Höhen umgebogen bzw. geschränkt wird und somit unterschiedliche Winkel ausbildet. Dies ist beim relativen Umklappen von Vorteil, da ein beim Umklappen äußerer Drahtabschnitt eine größere Strecke zurücklegt als ein innerer Drahtabschnitt und diese Differenz durch die unterschiedlichen Winkel mit einfachen Mitteln sowie auf eine kostengünstige Art und Weise ausgleichbar ist.

Gemäß einer bevorzugten Ausführungsform der Erfindung erfolgt das Erzeugen der Wellenwicklung aus dem Statordraht mit einer Mehrzahl von Wickelwellen an dem Wickelwerkzeug derart, dass der Statordraht um das erste Wickelmittel, zweite Wickelmittel und ein drittes Wickelmittel gewickelt wird, wobei das zweite Wickelmittel zwischen dem ersten Wickelmittel und dem dritten Wickelmittel angeordnet ist, wobei sich das erste Wickelmittel, das zweite Wickelmittel und das dritte Wickelmittel zumindest in einem Bereich gemeinsam entlang der ersten Wickellängsachse erstrecken, wobei das relative Verschieben des zweiten Wickelmittels zum ersten Wickelmittel sowie zum dritten Wickelmittel in Richtung des Verlaufs der ersten Wicklungslängsachse erfolgt, und wobei ein relatives Umklappen des dritten Wickelmittels zum zweiten Wickelmittel um eine in einer Mitte zwischen dem zweiten Wickelmittel und dem dritten Wickelmittel verlaufenden zweiten Wicklungslängsachse um den Umklappwinkel derart erfolgt, dass am dritten Wickelmittel angeordnete Statordrahtabschnitte den am zweiten Wickelmittel angeordneten Statordrahtabschnitten benachbart angeordnet sind. Beim relativen Verschieben ist es bevorzugt, wenn eine relative Lage des ersten Wickelmittels zum dritten Wickelmittel konstant bleibt. Somit wird beispielsweise lediglich das zweite Wickelmittel entlang der ersten Wickellängsachse bewegt. Die zweite Wickellängsachse ist zwischen dem zweiten Wickelmittel und dem dritten Wickelmittel angeordnet und verläuft vorzugsweise parallel zur ersten Wickellängsachse. Auf diese Weise ist beispielsweise eine Statorwicklung mit sechs Statordrähten oder einer Vielzahl von 6 Statordrähten, wie beispielsweise 12, 18 usw., pro Statornut mit einfachen Mitteln sowie auf eine kostengünstige Art und Weise herstellbar.

Erfindungsgemäß ist das Verfahren auch mit weiteren Wickelmitteln durchführbar, welche analog zu den übrigen Wickelmitteln angeordnet und verwendet werden können. Demnach ist es bevorzugt, dass die Wickelmittel abwechselnd einer ersten Gruppe und einer zweiten Gruppe zugeordnet werden, wobei das relative Verschieben als relatives Verschieben der beiden Gruppen zueinander erfolgt. Vorzugsweise weisen die Wickelmittel einer Gruppe beim relativen Verschieben eine konstante relative Lage zueinander auf. Das Umklappen erfolgt über die Wickellängsachsen, welche jeweils, insbesondere in der Mitte, zwischen zwei Wickelmitteln angeordnet sind und vorzugsweise parallel zueinander verlaufen. Dies hat den Vorteil, dass mit einfachen Mitteln sowie auf eine kostengünstige Art und Weise die Anzahl der Statordrähte pro Statornut erhöhbar ist.

Besonders bevorzugt erfolgt das Umklappen mit einem Umklappwinkel von zwischen 175° und 185°, insbesondere von 180°. Bei derartigen Umklappwinkeln sind die oberen Wellenhälften mit den vormals unteren Wellenhälften auf derselben Seite der Wickellängsachse sowie einander direkt benachbart angeordnet. Somit ist mit einfachen Mitteln sowie auf eine kostengünstige Art und Weise ist eine besonders vorteilhafte Raumausnutzung durch die Statorwicklung erzielbar.

Es ist bevorzugt, dass zum Halten des Statordrahts Haltemittel verwendet werden, welche am ersten Wickelmittel und dem zweiten Wickelmittel angeordnet sind. Es kann dabei vorgesehen sein, dass mindestens ein Haltemittel integral bzw. einstückig mit einem Wickelmittel ausgebildet ist. Es werden beispielsweise Haltemittel verwendet, die als Anschlagkörper, wie beispielsweise eine Wand, eine Nut oder dergleichen, ausgebildet sind. Eine Anschlagfläche des Haltemittels weist zu einem Grundkörper des jeweiligen Wickelmittels vorzugsweise einen Winkel von 90° oder weniger auf. Ein spitzer Winkel hat den Vorteil, dass ein unbeabsichtigtes seitliches Abrutschen des Statordrahts vom Haltemittel und somit vom Wickelmittel hierdurch verhinderbar ist. Dies hat den Vorteil, dass ein Platzbedarf für die Durchführung des erfindungsgemäßen Verfahrens reduziert ist. Der Winkel ist vorzugsweise größer als 60°, um ein Trennen der Statorwicklung von der Wickelvorrichtung zu verbessern. Am Wickelmittel angeordnete Haltemittel haben insbesondere den Vorteil, dass eine gemeinsame Bewegung von Wickelmittel und Haltemittel mit einfachen Mitteln sowie auf eine kostengünstige Art und Weise verbessert ist.

Gemäß einem zweiten Aspekt der Erfindung wird die Aufgabe durch eine Elektromaschine mit einem Rotor und einem Stator gelöst. Der Stator weist eine Statorwicklung aus einem elektrisch isolierten Statordraht auf. Erfindungsgemäß ist die Statorwicklung gemäß einem erfindungsgemäßen Verfahren hergestellt.

Bei der beschriebenen Elektromaschine ergeben sich sämtliche Vorteile, die bereits zu einem Verfahren zur Herstellung einer Statorwicklung für einen Stator einer Elektromaschine gemäß dem ersten Aspekt der Erfindung beschrieben worden sind.

Ein erfindungsgemäßes Verfahren zur Herstellung einer Statorwicklung für einen Stator einer Elektromaschine sowie eine erfindungsgemäße Elektromaschine werden nachfolgend anhand von Zeichnungen näher erläutert. Es zeigen jeweils schematisch:
- Figur 1: in einer Seitenansicht einen ersten Verfahrensabschnitt einer bevorzugten ersten Ausführungsform des erfindungsgemäßen Verfahrens,
- Figur 2: in einer Seitenansicht einen zweiten Verfahrensabschnitt der bevorzugten ersten Ausführungsform des erfindungsgemäßen Verfahrens,
- Figur 3: in einer perspektivischen Ansicht den gewickelten und geschränkten Statordraht aus Figur 2,
- Figur 4: in einer Seitenansicht die Statorwicklung nach einem dritten Verfahrensabschnitt der bevorzugten ersten Ausführungsform des erfindungsgemäßen Verfahrens,
- Figur 5: in einer perspektivischen Ansicht eine mittels der bevorzugten ersten Ausführungsform des erfindungsgemäßen Verfahrens hergestellte Statorwicklung,
- Figur 6: in einer Seitenansicht eine Verteilung der Statordrähte auf Statornuten einer nach der bevorzugten ersten Ausführungsform des erfindungsgemäßen Verfahrens hergestellten Statorwicklung,
- Figur 7: in einer Seitenansicht einen ersten Verfahrensabschnitt einer bevorzugten zweiten Ausführungsform des erfindungsgemäßen Verfahrens,
- Figur 8: in einer Seitenansicht einen zweiten Verfahrensabschnitt der bevorzugten zweiten Ausführungsform des erfindungsgemäßen Verfahrens,
- Figur 9: in einer Seitenansicht die Statorwicklung nach einem dritten Verfahrensabschnitt der bevorzugten zweiten Ausführungsform des erfindungsgemäßen Verfahrens,
- Figur 10: in einer Seitenansicht eine Verteilung der Statordrähte auf Statornuten einer nach der bevorzugten zweiten Ausführungsform des erfindungsgemäßen Verfahrens hergestellten Statorwicklung, und
- Figur 11: in einer Seitenansicht eine bevorzugte erste Ausführungsform einer erfindungsgemäßen Elektromaschine.

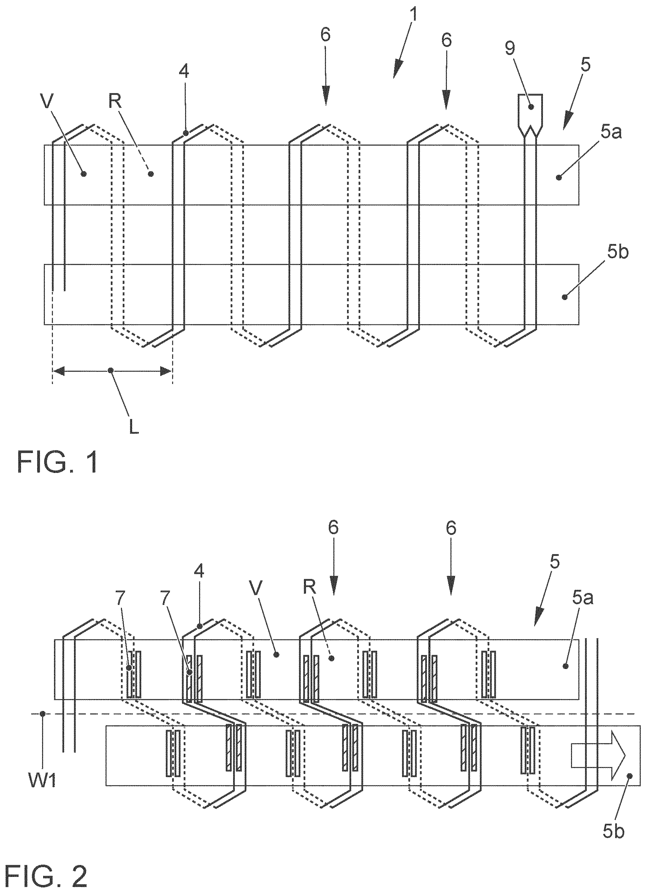

Elemente mit gleicher Funktion und Wirkungsweise sind in den Figuren 1 bis 11 jeweils mit denselben Bezugszeichen versehen.

In Fig. 1 ist ein erster Verfahrensabschnitt einer bevorzugten ersten Ausführungsform des erfindungsgemäßen Verfahrens schematisch in einer Seitenansicht abgebildet. Zunächst wird ein Wickelwerkzeug 5 mit einem ersten Wickelmittel 5a und einem zweiten Wickelmittel 5b bereitgestellt, welche jeweils als Wickelschwert ausgebildet sind und sich parallel zueinander erstrecken. Das erste Wickelmittel 5a und das zweite Wickelmittel 5b weisen jeweils eine Vorderseite V und eine nicht erkennbare Rückseite R auf. Mittels einer Drahtdüse 9 wird ein Statordraht 4 um das Wickelwerkzeug 5 gewickelt. Dabei werden mehrere Wickelwellen 6 mit einer Wickelwellenlänge L erzeugt. Die einzelnen Wickelwellen 6 erstrecken sich jeweils um das erste Wickelmittel 5a und das zweite Wickelmittel 5b. In diesem Ausführungsbeispiel werden der besseren Übersicht halber nur zwei Statordrähte 4 gezeigt.

Fig. 2 zeigt einen zweiten Verfahrensabschnitt der bevorzugten ersten Ausführungsform des erfindungsgemäßen Verfahrens schematisch in einer Seitenansicht. In diesem zweiten Verfahrensabschnitt wird das zweite Wickelmittel 5b relativ zum ersten Wickelmittel 5a entlang einer ersten Wickellängsachse W1 bewegt. Hierbei wird der Statordraht 4 gegen Haltemittel 7, welche an den Vorderseiten V und Rückseiten R des ersten Wickelmittels 5a und zweiten Wickelmittels 5b angeordnet sind, gedrückt, sodass der Statordraht 4 geschränkt wird. Wie aus der Fig. 2 ersichtlich, weisen die Haltemittel 7 der Vorderseite V des ersten Wickelmittels 5a einen geringeren Abstand zur ersten Wickellängsachse W1 auf als die Haltemittel 7 der Rückseite R des ersten Wickelmittels 5a.

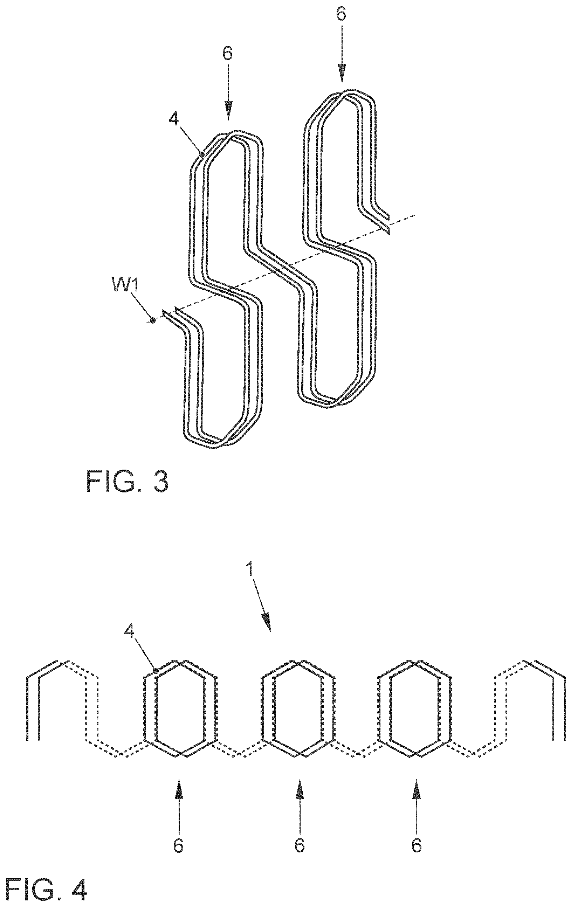

In Fig. 3 ist der gewickelte und geschränkte Statordraht 4 aus Fig. 2 schematisch in einer perspektivischen Ansicht dargestellt. Die Wickelwellen 6 erstrecken sich entlang der ersten Wickellängsachse W1, wobei untere Statordrahtabschnitte des Statordrahts 4 relativ zu oberen Statordrahtabschnitten des Statordrahts 4 entlang der Wickellängsachse W1 versetzt sind.

Fig. 4 zeigt die Statorwicklung 1 nach einem dritten Verfahrensabschnitt der bevorzugten ersten Ausführungsform des erfindungsgemäßen Verfahrens schematisch in einer Seitenansicht. Die vormals unteren Statordrahtabschnitte des Statordrahts 4 sind auf die oberen Statordrahtabschnitte des Statordrahts 4 geklappt, sodass sich eine Statorwicklung 1 mit Wickelwellen 6 ergibt, welche eine etwa wabenförmige Struktur aufweist.

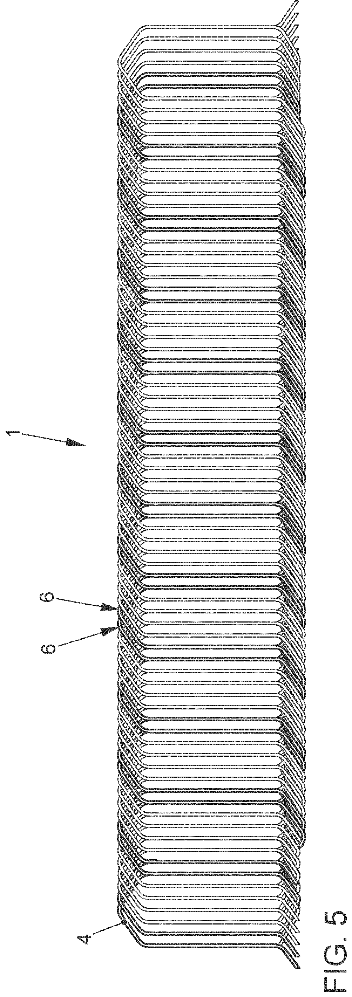

In Fig. 5 ist eine mittels der bevorzugten ersten Ausführungsform des erfindungsgemäßen Verfahrens hergestellte Statorwicklung 1 schematisch in einer perspektivischen Ansicht abgebildet. Die Statorwicklung 1 weist eine Vielzahl von Wickelwellen 6 auf. In dieser Ansicht sind mehrere Statordrähte 4 mittels des erfindungsgemäßen Verfahrens zur Statorwicklung 1 verarbeitet. Die Wickelwellen 6 weisen zu benachbarten Wickelwellen 6 jeweils denselben Abstand auf.

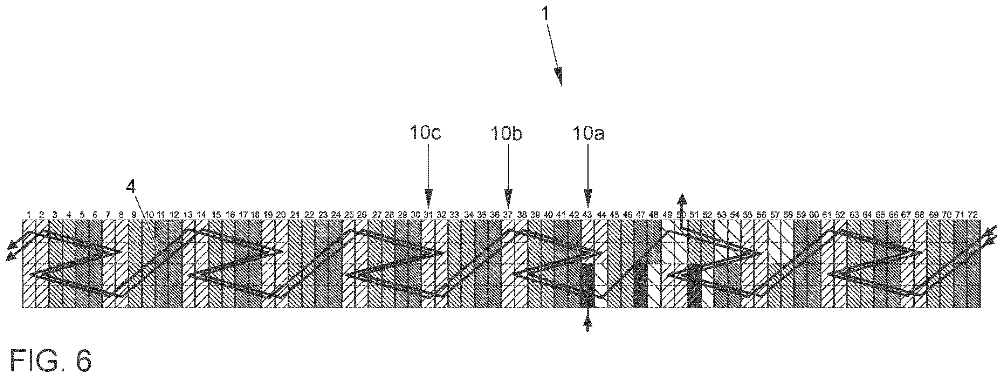

Fig. 6 zeigt eine Verteilung der Statordrähte 4 auf Statornuten einer nach der bevorzugten ersten Ausführungsform des erfindungsgemäßen Verfahrens hergestellten Statorwicklung 1 schematisch in einer Seitenansicht. Aus dieser Ansicht geht hervor, dass ein Statordraht 4 zunächst in einer ersten bzw. untersten Lage einer ersten Statornut 10a angeordnet ist. Anschließend verläuft der Statordraht 4 in eine zweite Lage einer zweiten Statornut 10b. Danach verläuft der Statordraht 4 in eine dritte Lage der ersten Statornut 10a, und schließlich verläuft der Statordraht 4 in eine vierte bzw. oberste Lage der zweiten Statornut 10b. Danach fängt dasselbe Muster in einer ersten bzw. untersten Lage einer dritten Statornut 10c wieder an. Weitere Statordrähte 4 der Statorwicklung 1 verlaufen analog hierzu. Eine Lagenreihenfolge des Statordrahts 4 bei 4 Drahtlagen pro Statornut beträgt daher vorzugsweise: 1. Lage, 2. Lage, 3. Lage, 4. Lage und wieder von Anfang an.

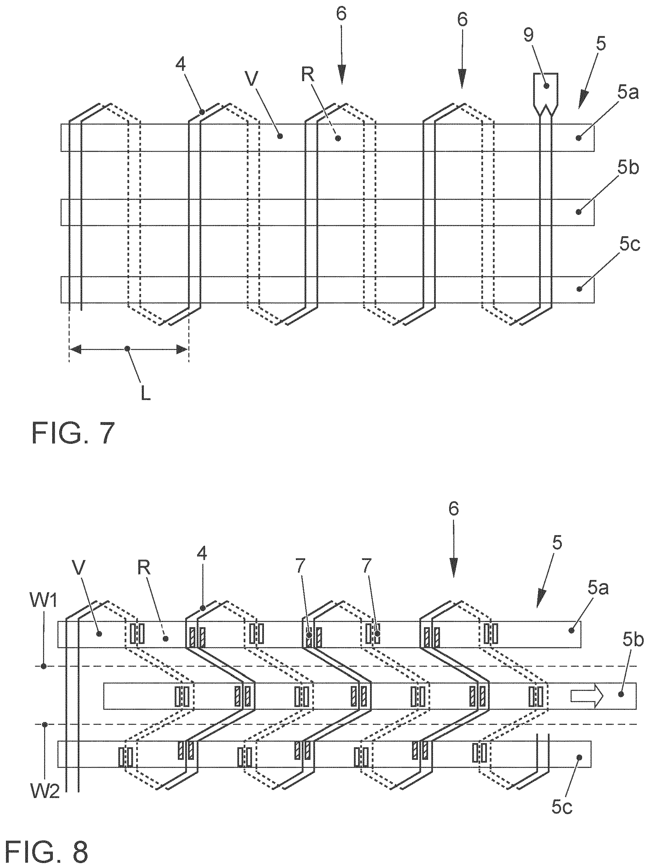

In Fig. 7 ist ein erster Verfahrensabschnitt einer bevorzugten zweiten Ausführungsform des erfindungsgemäßen Verfahrens schematisch in einer Seitenansicht abgebildet. Zunächst wird ein Wickelwerkzeug 5 mit einem ersten Wickelmittel 5a, einem zweiten Wickelmittel 5b und einem dritten Wickelmittel 5c bereitgestellt, welche jeweils als Wickelschwert ausgebildet sind und sich parallel zueinander erstrecken. Das erste Wickelmittel 5a, das zweite Wickelmittel 5b und das dritte Wickelmittel 5c weisen jeweils eine Vorderseite V und eine nicht erkennbare Rückseite R auf. Mittels einer Drahtdüse 9 wird ein Statordraht 4 um das Wickelwerkzeug 5 gewickelt. Dabei werden mehrere Wickelwellen 6 mit einer Wickelwellenlänge L erzeugt. Die einzelnen Wickelwellen 6 erstrecken sich jeweils um das erste Wickelmittel 5a, das zweite Wickelmittel 5b und das dritte Wickelmittel 5c. In diesem Ausführungsbeispiel werden der besseren Übersicht halber nur zwei Statordrähte 4 gezeigt.

Fig. 8 zeigt einen zweiten Verfahrensabschnitt der bevorzugten zweiten Ausführungsform des erfindungsgemäßen Verfahrens schematisch in einer Seitenansicht. In diesem zweiten Verfahrensabschnitt wird das zweite Wickelmittel 5b relativ zum ersten Wickelmittel 5a sowie zum dritten Wickelmittel 5c entlang einer ersten Wickellängsachse W1 bewegt. Hierbei wird der Statordraht 4 gegen Haltemittel 7, welche an den Vorderseiten V und Rückseiten R des ersten Wickelmittels 5a, des zweiten Wickelmittels 5b sowie des dritten Wickelmittels 5c angeordnet sind, gedrückt, sodass der Statordraht 4 geschränkt wird. Wie aus der Fig. 8 ersichtlich, weisen die Haltemittel 7 der Vorderseite V des ersten Wickelmittels 5a einen geringeren Abstand zur ersten Wickellängsachse W1 auf als die Haltemittel 7 der Rückseite R des ersten Wickelmittels 5a. Ebenso weisen die Haltemittel 7 der Vorderseite V des dritten Wickelmittels 5c einen geringeren Abstand zur zweiten Wickellängsachse W2 auf als die Haltemittel 7 der Rückseite R des dritten Wickelmittels 5c.

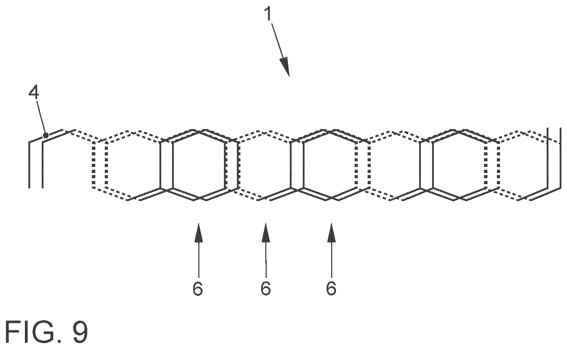

In Fig. 9 ist die Statorwicklung 1 nach einem dritten Verfahrensabschnitt der bevorzugten zweiten Ausführungsform des erfindungsgemäßen Verfahrens schematisch in einer Seitenansicht abgebildet. Die vormals unteren Statordrahtabschnitte des Statordrahts 4 und die vormals oberen Statordrahtabschnitte des Statordrahts 4 sind auf die mittleren Statordrahtabschnitte des Statordrahts 4 geklappt, sodass sich eine Statorwicklung 1 mit Wickelwellen 6 ergibt, welche eine etwa wabenförmige Struktur aufweist.

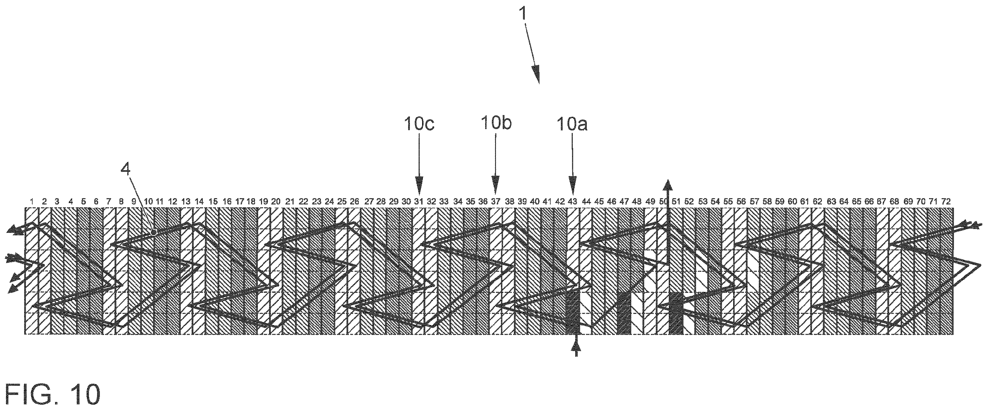

Fig. 10 zeigt eine Verteilung der Statordrähte auf Statornuten einer nach der bevorzugten zweiten Ausführungsform des erfindungsgemäßen Verfahrens hergestellten Statorwicklung 1 schematisch in einer Seitenansicht. Aus dieser Ansicht geht hervor, dass ein Statordraht 4 zunächst in einer ersten bzw. untersten Lage einer ersten Statornut 10a angeordnet ist. Anschließend verläuft der Statordraht 4 in eine zweite Lage einer zweiten Statornut 10b. Danach verläuft der Statordraht 4 in eine dritte Lage der ersten Statornut 10a. Danach verläuft der Statordraht 4 in eine sechste bzw. oberste Lage der zweiten Statornut 10b. Anschließend verläuft der Statordraht 4 in eine fünfte Lage einer dritten Statornut 10c und schließlich in eine vierte Lage der zweiten Statornut 10b. Danach fängt dasselbe Muster in einer ersten bzw. untersten Lage einer dritten Statornut 10c wieder an. Weitere Statordrähte 4 der Statorwicklung 1 verlaufen analog hierzu. Eine Lagenreihenfolge des Statordrahts 4 bei 6 Drahtlagen pro Statornut beträgt daher vorzugsweise: 1. Lage, 2. Lage, 3. Lage, 6. Lage, 5. Lage, 4. Lage und wieder von Anfang an. Eine Lagenreihenfolge des Statordrahts 4 bei 8 Drahtlagen pro Statornut beträgt vorzugsweise: 1. Lage, 2. Lage, 3. Lage, 6. Lage, 7. Lage, 8. Lage, 5. Lage, 4. Lage und wieder von Anfang an. Eine Lagenreihenfolge des Statordrahts 4 bei 10 Drahtlagen pro Statornut beträgt vorzugsweise: 1. Lage, 2. Lage, 3. Lage, 6. Lage, 7. Lage, 10. Lage, 9. Lage, 8. Lage, 5. Lage, 4. Lage und wieder von Anfang an. Dies kann für beliebig viele Lagen entsprechend analog fortgeführt werden.

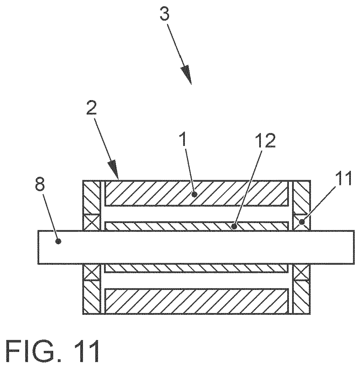

In Fig. 11 ist eine bevorzugte Ausführungsform einer erfindungsgemäßen Elektromaschine 3 schematisch in einer Seitenansicht abgebildet. Die Elektromaschine 3 weist einen Stator 2 mit einer erfindungsgemäßen Statorwicklung 1 auf. Ferner weist die Elektromaschine 3 einen Rotor 8 auf, der über Wälzlager 11 drehbar zum Stator 2 gelagert ist. Am Rotor 8 sind Permanentmagnete 12 angeordnet, welche dem Stator 2 zugewandt sind.

### Bezugszeichenliste

- 1: Statorwicklung
- 2: Stator
- 3: Elektromaschine
- 4: Statordraht
- 5: Wickelwerkzeug
- 5a: erstes Wickelmittel
- 5b: zweites Wickelmittel
- 5c: drittes Wickelmittel
- 6: Wickelwelle
- 7: Haltemittel
- 8: Rotor
- 9: Drahtdüse
- 10a: erste Statornut
- 10b: zweite Statornut
- 10c: dritte Statornut
- 11: Wälzlager
- 12: Permanentmagnet

- L: Wickelwellenlänge
- R: Rückseite
- V: Vorderseite
- W1: erste Wickellängsachse
- W2: zweite Wickellängsachse

## Patentansprüche

1. Verfahren zur Herstellung einer Statorwicklung (1) für einen Stator (2) einer Elektromaschine (3), aufweisend die folgenden Schritte:
- Bereitstellen eines Statordrahts (4),
- Wickeln des Statordrahts (4) um ein Wickelwerkzeug (5) zum Erzeugen einer Wellenwicklung mit einer Mehrzahl von Wickelwellen (6), wobei das Wickelwerkzeug (5) ein erstes Wickelmittel (5a) und ein vom ersten Wickelmittel (5a) beabstandet angeordnetes zweites Wickelmittel (5b) aufweist, wobei sich das erste Wickelmittel (5a) und das zweite Wickelmittel (5b) zumindest in einem Bereich gemeinsam entlang einer in einer Mitte zwischen dem ersten Wickelmittel (5a) und dem zweiten Wickelmittel (5b) verlaufenden ersten Wickellängsachse (W1) erstrecken, wobei die einzelnen Wickelwellen (6) jeweils durch Wickeln des Statordrahts (4) um das erste Wickelwerkzeug (5a) und das zweite Wickelwerkzeug (5b) herum erzeugt werden,
- Halten des Statordrahts (4) am ersten Wickelmittel (5a) und am zweiten Wickelmittel (5b) mittels einem Haltemittel (7) zum Verhindern eines seitlichen Abrutschens des Statordrahts (4) in Richtung des Verlaufs der ersten Wicklungslängsachse (W1),
- Relatives Verschieben des zweiten Wickelmittels (5b) zum ersten Wickelmittel (5a) in Richtung des Verlaufs der ersten Wicklungslängsachse (W1), wobei die einzelnen Wickelwellen (6) hierdurch jeweils entlang der ersten Wicklungslängsachse (W1) verbogen werden, und
- Relatives Umklappen des ersten Wickelmittels (5a) zum zweiten Wickelmittel (5b) um die erste Wicklungslängsachse (W1) um einen Umklappwinkel derart, dass am ersten Wickelmittel (5a) angeordnete Statordrahtabschnitte den am zweiten Wickelmittel (5b) angeordneten Statordrahtabschnitten benachbart angeordnet sind.

2. Verfahren nach Anspruch 1,
**dadurch gekennzeichnet,**
**dass** ein Statordraht (4) mit einem rechteckigen Drahtquerschnitt bereitgestellt wird.

3. Verfahren nach Anspruch 2,
**dadurch gekennzeichnet,**
**dass** ein Statordraht (4) bereitgestellt wird, dessen Drahthöhe höchstens 3 mm und dessen Drahtbreite höchstens 5 mm beträgt.

4. Verfahren nach einem der vorangegangenen Ansprüche,
**dadurch gekennzeichnet,**
**dass** als erstes Wickelmittel (5a) ein erstes Wickelschwert und/oder als zweites Wickelmittel (5b) ein zweites Wickelschwert verwendet wird.

5. Verfahren nach einem der vorangegangenen Ansprüche,
**dadurch gekennzeichnet,**
**dass** das relative Verschieben des ersten Wickelmittels (5a) zum zweiten Wickelmittel (5b) um zwischen 5/12 bis 7/12 einer Wickelwellenlänge (L) der Wickelwellen (6) entlang der ersten Wicklungslängsachse (W1) erfolgt.

6. Verfahren nach einem der vorangegangenen Ansprüche,
**dadurch gekennzeichnet,**
**dass** der Statordraht (4) mittels der Haltemittel (7) an einer Vorderseite (V) und einer Rückseite (R) des ersten Wickelmittels (5a) und/oder an einer Vorderseite (V) und einer Rückseite (R) des zweiten Wickelmittels (5b) an jeweils unterschiedlichen Höhen gehalten wird.

7. Verfahren nach einem der vorangegangenen Ansprüche,
**dadurch gekennzeichnet,**
**dass** das Erzeugen der Wellenwicklung aus dem Statordraht (4) mit einer Mehrzahl von Wickelwellen (6) an dem Wickelwerkzeug (5) derart erfolgt, dass der Statordraht (4) um das erste Wickelmittel (5a), zweite Wickelmittel (5b) und ein drittes Wickelmittel (5c) gewickelt wird, wobei das zweite Wickelmittel (5b) zwischen dem ersten Wickelmittel (5a) und dem dritten Wickelmittel (5c) angeordnet ist, wobei sich das erste Wickelmittel (5a), das zweite Wickelmittel (5b) und das dritte Wickelmittel (5c) zumindest in einem Bereich gemeinsam entlang der ersten Wickellängsachse (W1) erstrecken, wobei das relative Verschieben des zweiten Wickelmittels (5b) zum ersten Wickelmittel (5a) sowie zum dritten Wickelmittel (5c) in Richtung des Verlaufs der ersten Wicklungslängsachse erfolgt, und wobei ein relatives Umklappen des dritten Wickelmittels (5c) zum zweiten Wickelmittel (5b) um eine in einer Mitte zwischen dem zweiten Wickelmittel (5b) und dem dritten Wickelmittel (5c) verlaufenden zweiten Wicklungslängsachse (W2) um den Umklappwinkel derart erfolgt, dass am dritten Wickelmittel (5c) angeordnete Statordrahtabschnitte den am zweiten Wickelmittel (5b) angeordneten Statordrahtabschnitten benachbart angeordnet sind.

8. Verfahren nach einem der vorangegangenen Ansprüche,
**dadurch gekennzeichnet,**
**dass** das Umklappen mit einem Umklappwinkel von zwischen 175° und 185°, insbesondere von 180°, erfolgt.

9. Verfahren nach einem der vorangegangenen Ansprüche,
**dadurch gekennzeichnet,**
**dass** zum Halten des Statordrahts (4) Haltemittel (7) verwendet werden, welche am ersten Wickelmittel (5a) und dem zweiten Wickelmittel (5b) angeordnet sind.

10. Elektromaschine (3), aufweisend einen Rotor (8) und einen Stator (2), wobei der Stator (2) eine Statorwicklung (1) aus einem elektrisch isolierten Statordraht (4) aufweist,
**dadurch gekennzeichnet,**
**dass** die Statorwicklung (1) gemäß einem Verfahren nach einem der vorangegangenen Ansprüche hergestellt ist.

## Claims

1. Method for manufacturing a stator winding (1) for a stator (2) of an electric machine (3), the method comprising the following steps:
- providing a stator wire (4),
- winding the stator wire (4) around a winding tool (5) in order to produce a wave winding comprising a plurality of winding waves (6), wherein the winding tool (5) comprises a first winding means (5a) and a second winding means (5b) arranged at a distance from the first winding means (5a), wherein the first winding means (5a) and the second winding means (5b) extend together, at least in one region, along a first winding longitudinal axis (W1) running in a center between the first winding means (5a) and the second winding means (5b), wherein the individual winding waves (6) are each produced by winding the stator wire (4) around the first winding tool (5a) and the second winding tool (5b),
- holding the stator wire (4) on the first winding means (5a) and on the second winding means (5b) by means of a holding means (7) in order to prevent the stator wire (4) from slipping sideways in the direction of the course of the first winding longitudinal axis (W1),
- relatively displacing the second winding means (5b) toward the first winding means (5a) in the direction of the course of the first winding longitudinal axis (W1), wherein the individual winding waves (6) are thereby each bent along the first winding longitudinal axis (W1), and
- relatively folding the first winding means (5a) relative toward the second winding means (5b) about the first winding longitudinal axis (W1) by a folding angle such that stator wire portions arranged on the first winding means (5a) are arranged adjacent to the stator wire portions arranged on the second winding means (5b).

2. Method according to claim 1,
**characterized in that**
a stator wire (4) which has a rectangular wire cross-section is provided.

3. Method according to claim 2,
**characterized in that**
a stator wire (4) is provided, the wire height of which is at most 3 mm and the wire width of which is at most 5 mm.

4. Method according to any of the preceding claims,
**characterized in that**
a first winding blade is used as the first winding means (5a) and/or a second winding blade is used as the second winding means (5b).

5. Method according to any of the preceding claims,
**characterized in that**
relatively displacing the first winding means (5a) toward the second winding means (5b) takes place by between 5/12 to 7/12 of a winding wave length (L) of the winding waves (6) along the first winding longitudinal axis (W1).

6. Method according to any of the preceding claims,
**characterized in that**
the stator wire (4) is held by means of the holding means (7) at a front side (V) and a rear side (R) of the first winding means (5a) and/or at a front side (V) and a rear side (R) of the second winding means (5b) at different heights.

7. Method according to any of the preceding claims,
**characterized in that**
producing the wave winding from the stator wire (4), which wave winding comprises a plurality of winding waves (6), on the winding tool (5) takes place in such a way that the stator wire (4) is wound around the first winding means (5a), second winding means (5b) and a third winding means (5c), wherein the second winding means (5b) is arranged between the first winding means (5a) and the third winding means (5c), wherein the first winding means (5a), the second winding means (5b) and the third winding means (5c) extend together along the first winding longitudinal axis (W1) at least in one region, wherein relatively displacing the second winding means (5b) toward the first winding means (5a) and toward the third winding means (5c) takes place in the direction of the course of the first winding longitudinal axis, and wherein relatively folding the third winding means (5c) toward the second winding means (5b) by the folding angle about a second winding longitudinal axis (W2) located in a center between the second winding means (5b) and the third winding means (5c) takes place in such a way that stator wire portions arranged on the third winding means (5c) are arranged adjacent to the stator wire portions arranged on the second winding means (5b).

8. Method according to any of the preceding claims,
**characterized in that**
the folding takes place at a folding angle of between 175° and 185°, in particular 180°.

9. Method according to any of the preceding claims,
**characterized in that**
in order to hold the stator wire (4), holding means (7) are used which are arranged on the first winding means (5a) and the second winding means (5b).

10. Electric machine (3) comprising a rotor (8) and a stator (2), the stator (2) comprising a stator winding (1) made of an electrically insulated stator wire (4),
**characterized in that**
the stator winding (1) is manufactured according to a method according to any of the preceding claims.

## Revendications

1. Procédé de fabrication d'un enroulement statorique (1) pour un stator (2) d'une machine électrique (3), présentant les étapes suivantes :
- fourniture d'un fil de stator (4),
- enroulement du fil de stator (4) autour d'un outil d'enroulement (5) permettant de générer un enroulement ondulé comportant une pluralité d'ondes d'enroulement (6), dans lequel l'outil d'enroulement (5) présente un premier moyen d'enroulement (5a) et un deuxième moyen d'enroulement (5b) disposé à distance du premier moyen d'enroulement (5a), dans lequel le premier moyen d'enroulement (5a) et le deuxième moyen d'enroulement (5b) s'étendent conjointement, au moins dans une zone, le long d'un premier axe longitudinal d'enroulement (W1) s'étendant à mi-chemin entre le premier moyen d'enroulement (5a) et le deuxième moyen d'enroulement (5b), dans lequel les différentes ondes d'enroulement (6) sont respectivement générées par un enroulement du fil de stator (4) autour du premier outil d'enroulement (5a) et du second outil d'enroulement (5b),
- maintien du fil de stator (4) sur le premier moyen d'enroulement (5a) et sur le deuxième moyen d'enroulement (5b) au moyen de moyens de maintien (7) permettant d'empêcher un glissement latéral du fil de stator (4) en direction de l'extension du premier axe longitudinal d'enroulement (W1),
- coulissement relatif du deuxième moyen d'enroulement (5b) par rapport au premier moyen d'enroulement (5a) en direction de l'extension du premier axe longitudinal d'enroulement (W1), dans lequel les différentes ondes d'enroulement (6) sont ainsi tordues respectivement le long du premier axe longitudinal d'enroulement (W1), et
- rabattement relatif du premier moyen d'enroulement (5a) par rapport au deuxième moyen d'enroulement (5b) autour du premier axe longitudinal d'enroulement (W1) à un angle de rabattement de telle sorte que des sections de fil de stator disposées sur le premier moyen d'enroulement (5a) sont disposées de manière adjacente aux sections de fil de stator disposées sur le deuxième moyen d'enroulement (5b).

2. Procédé selon la revendication 1,
**caractérisé en ce**
**qu'**un fil de stator (4) comportant une section transversale de fil rectangulaire est fourni.

3. Procédé selon la revendication 2,
**caractérisé en ce**
**qu'**un fil de stator (4) est fourni, dont la hauteur de fil est au maximum de 3 mm et dont la largeur de fil est au maximum de 5 mm.

4. Procédé selon l'une des revendications précédentes,
**caractérisé en ce**
**qu**'une première ailette d'enroulement est utilisée comme premier moyen d'enroulement (5a) et/ou une seconde ailette d'enroulement est utilisée comme deuxième moyen d'enroulement (5b).

5. Procédé selon l'une des revendications précédentes,
**caractérisé en ce**
**que** le coulissement relatif du premier moyen d'enroulement (5a) par rapport au deuxième moyen d'enroulement (5b) est effectué entre 5/12 à 7/12 d'une longueur d'onde d'enroulement (L) des ondes d'enroulement (6) le long du premier axe longitudinal d'enroulement (W1).

6. Procédé selon l'une des revendications précédentes,
**caractérisé en ce**
**que** le fil de stator (4) est maintenu au moyen des moyens de maintien (7) sur un côté avant (V) et un côté arrière (R) du premier moyen d'enroulement (5a) et/ou sur un côté avant (V) et un côté arrière (R) du deuxième moyen d'enroulement (5b) à des hauteurs respectivement différentes.

7. Procédé selon l'une des revendications précédentes,
**caractérisé en ce**
**que** la génération de l'enroulement ondulé à partir du fil de stator (4) est effectuée avec une pluralité d'ondes d'enroulement (6) sur l'outil d'enroulement (5) de telle sorte que le fil de stator (4) est enroulé autour du premier moyen d'enroulement (5a), du deuxième moyen d'enroulement (5b) et d'un troisième moyen d'enroulement (5c), dans lequel le deuxième moyen d'enroulement (5b) est disposé entre le premier moyen d'enroulement (5a) et le troisième moyen d'enroulement (5c), dans lequel le premier moyen d'enroulement (5a), le deuxième moyen d'enroulement (5b) et le troisième moyen d'enroulement (5c) s'étendent conjointement, au moins dans une zone, le long du premier axe longitudinal d'enroulement (W1), dans lequel le coulissement relatif du deuxième moyen d'enroulement (5b) par rapport au premier moyen d'enroulement (5a) ainsi que par rapport au troisième moyen d'enroulement (5c) est effectué en direction de l'extension du premier axe longitudinal d'enroulement, et dans lequel un rabattement relatif du troisième moyen d'enroulement (5c) par rapport au deuxième moyen d'enroulement (5b) autour d'un second axe longitudinal d'enroulement (W2) s'étendant à mi-chemin entre le deuxième moyen d'enroulement (5b) et le troisième moyen d'enroulement (5c) est effectué à l'angle de rabattement de telle sorte que des sections de fil de stator disposées sur le troisième moyen d'enroulement (5c) sont disposées de manière adjacente aux sections de fil de stator disposées sur le deuxième moyen d'enroulement (5b).

8. Procédé selon l'une des revendications précédentes,
**caractérisé en ce**
**que** le rabattement est effectué à un angle de rabattement compris entre 175° et 185°, en particulier de 180°.

9. Procédé selon l'une des revendications précédentes,
**caractérisé en ce**
**que** des moyens de maintien (7) sont utilisés pour le maintien du fil de stator (4), lesquels sont disposés sur le premier moyen d'enroulement (5a) et sur le deuxième moyen d'enroulement (5b).

10. Machine électrique (3), présentant un rotor (8) et un stator (2), dans laquelle le stator (2) présente un enroulement statorique (1) constitué d'un fil de stator (4) isolé électriquement,
**caractérisée en ce**
**que** l'enroulement statorique (1) est fabriqué selon un procédé selon l'une des revendications précédentes.
